# EUROPEAN PATENT APPLICATION

(11) **EP 1 603 101 A1**
(43) Date of publication of application: **07.12.2005**
(21) Application number: 04013004.9
(22) Date of filing: 02.06.2004
(51) Int. Cl.: G09F 9/30, G02F 1/13, H04M 1/02

(54) **Display**

(71) Applicant: Sony Ericsson Mobile Communications AB, 221 88 Lund (SE)
(72) Inventor: Ying, Zhinong, 226 49 Lund (SE); Ding, Hong, 234 38 Lomma (SE)
(74) Representative: Dahnér, Christer

(57) **Abstract**

A display unit for a portable electronic device such as a cellular phone comprising the same is disclosed, whereby the display unit (1) comprises a transparent conductive layer (9) arranged thereon such that the display unit (1) prevents electromagnetic absorption or electromagnetic interaction problems, such that RF loss and EM interaction are reduced or prevented.

## Description

### TECHNICAL FIELD

The present invention relates to a display unit, and a portable electronic device comprising such a display unit.

### BACKGROUND OF THE INVENTION

Today, in the world of portable electronic devices provided with displays there is a trend towards larger and larger displays. This trend is also very much present in the world of mobile communications, where more and more customers demand portable electronic communication devices, such as cellular phones having such displays. Most of the displays of today in cellular phones are different types of translucent LCDs (Liquid Crystal Displays) or displays comprising other semi-conducting materials.

Moreover, the trend is also towards smaller and smaller portable communication devices requiring built-in type miniature antennas, sometimes located close to the display, and typically operating within a 800 MHz-6000 MHz frequency range.

Since displays for portable electronic devices typically include semi-conducting liquid crystal material, they absorb electromagnetic radiation such as RF energy transmitted to or from the antenna, which causes problems such as loss in the RF band.

Another problem is that there is also a risk for interaction between RF circuits (for the antenna) and the display, which may cause problems for the display, such as decreasing optical performance of the display or giving rise to noise in circuits. This interaction will in the following be referred to as EMC interaction (electromagnetic interaction).

There is thus a need for providing a display unit for a portable electronic device, that does not provide loss in the RF band or interact with the RF circuits as regards EMC interaction.

### SUMMARY OF THE INVENTION

Thus an object of the present invention is to provide a display unit for a portable electronic device that does not provide loss in the RF band or interact with the RF circuits.

This is achieved by providing a display unit that does not absorb electromagnetic radiation.

According to a principal aspect of the present invention, this can be achieved a transparent conductive layer over a front layer of the display unit module in order to prevent electromagnetic absorption or reduce electromagnetic interaction.

According to a first aspect of the present invention, the object is achieved by providing a display unit for a portable electronic device, comprising:
- a rear substrate, a front substrate, and sandwiched there-between
- an essentially translucent display layer, which is semi-conducting,
- wherein said front substrate comprises an essentially transparent conductive layer arranged to prevent electromagnetic absorption or interaction, such that the display unit is shielded.

Herein, the term "essentially translucent" includes semi-transparent materials of all types.

Herein, the term "semi-conducting" refers to all materials that can absorb electromagnetic radiation in some way.

A second aspect of the invention is directed towards a display unit including the features of the first aspect, wherein the conductive film has a transparency more than 90 %.

A third aspect of the invention is directed towards a display unit including the features of the first or the second aspect, wherein the conductive film is made of indium tin oxide (ITO).

A fourth aspect of the invention is directed towards a display unit including the features of the first or the second aspect, wherein the conductive layer is made of a polymeric material.

A fifth aspect of the invention includes any one of the first to the fourth aspects, wherein the conductive layer is connected to ground on the PCB.

A sixth aspect includes the fifth aspect, wherein the conductive layer is arranged in a metal frame connected to ground on the PCB.

A seventh aspect includes the sixth aspect, wherein the conductive layer is arranged to the frame by putting the layer on the top of the display after assembling of the display unit.

An eight aspect includes any one of the previous aspects, wherein the conductive layer is provided on a front polarizer of the front substrate.

Yet another aspect of the invention is directed towards a portable electronic device comprising:
- at least one display unit, comprising:

- a rear substrate, a front substrate, and sandwiched there-between
- an essentially translucent display layer, which is semi-conducting,
- wherein said front substrate comprises an essentially transparent conductive layer arranged to prevent electromagnetic absorption or interaction, such that the display unit is shielded.

With the proposed invention, there is excellent prevention of electromagnetic absorption and reduced electromagnetic interaction.

These and other aspects and advantages of the invention will in the following be apparent from and elucidated with reference to the embodiments described hereinafter.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

Fig. 1 is a perspective view of a display unit according to an embodiment of the invention.
Fig. 2 is a sectional view of parts of the display unit in Fig. 1, illustrating only the conductive layer, the front substrate layer, and the liquid crystal layer.
Fig. 3 is a portable electronic device in the form of a cellular phone including a display unit of Fig. 1.

### DETAILED DESCRIPTION OF THE INVENTION

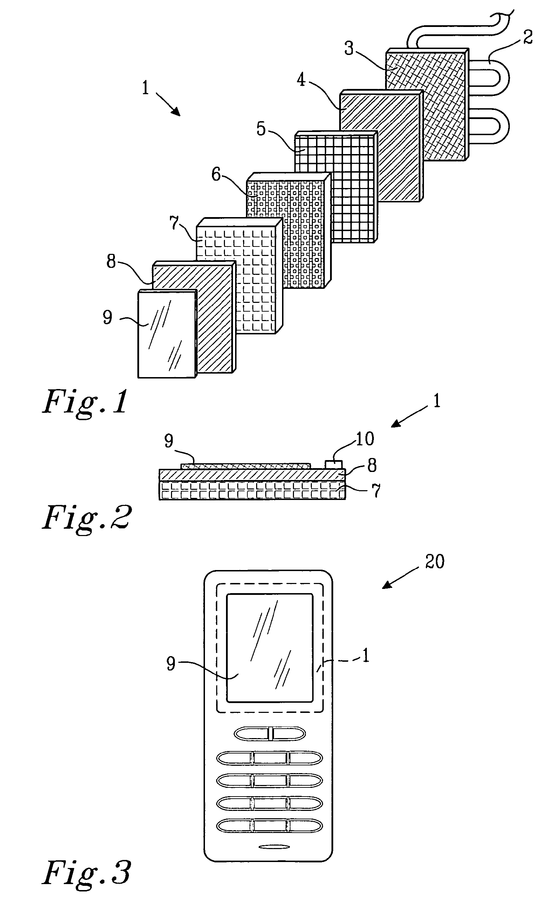

Now is referred to Fig. 1, which is a perspective view of parts of a display unit 1 according to a first embodiment of the invention.

The display unit 1 comprises, as consequtive layers, an auxiliary light source 2 (herein a backlighting system including a fluorescent lamp and a light guide), a diffuser (of conventional type) 3, a rear polarizer 4, a rear substrate (glass w/TFT array and column driver layer) 5, an essentially translucent liquid crystal layer 6, a front substrate (glass w/electrode and colour filter layer) 7, a front polarizer 8, and provided thereon a transparent conductive layer 9. The dimensions of the components making up the display unit (module) shown in this figure are not to scale, but only intended to schematically illustrate the built-up more clearly. Therefore, some components (layers) are for instance shown much thicker than in reality.

The liquid crystal layer 6 is sandwiched between the front substrate 7 and the rear substrate 5, each of which is transparent. It is assumed that a visible side by an observer is from the front substrate 5. Furthermore, typically the display unit 1 comprises scanning electrodes and data electrodes or the like, typically of indium tin oxide arranged in a conventional way, typically provided on the rear 5 and the front 7 substrates.

For a better understanding of the underlying principle of the invention and/or reduction to practice, now is referred to Fig. 2, which is a cross-sectional view of part of the display unit 1 according to the invention shown in Fig. 1, in which part the transparent conductive layer 9 is provided on the front polarizer 8 of the substrate 7.

On the front substrate 7 there is provided the transparent conductive layer 9, which can be provided on the entire surface of the front polarizer 8 or on a part thereof. In this Fig. 2, only a part is covered. In a way known per se (therefore not shown), the transparent conductive layer 9 is connected to ground, typically to ground on the PCB (Printed Circuit Board) of the portable electronic device. Typically, according to an embodiment of the invention, this could be provided by arranging the conductive layer in, and in contact to, a metal frame (not shown), electrically connected thereto when the display unit is assembled by pressing together the layers making up the display unit, thus without requiring any soldering. However, the connection of the conductive layer 9 (or layers) to a chassis or the like can be made in any suitable way, provided shielding is provided. By means of this conductive layer 9, RF electromagnetic absorption is strongly reduced or almost eliminated.

The display unit 1 operates in a manner known per se within the field of translucent liquid crystal display panels. When light in an external environment is strong it operates in a reflection mode known per se, and when external light is weak, the auxiliary light source 2 is turned on to improve visability in a manner known per se, whereby the display unit 1 operates as a transflective display. The auxiliary light source 2 can also include a so-called front lighting system, a technique well-known for a person skilled in the art of cellular phones, thus this is not further described or illustrated.

Herein, the term "color filter layer" is referred to as a layer of suitable thickness and composition comprising a color filter of conventional type typically including red, green and blue filters. Since such filters are well known from prior art, the composition of this layer will not be described in more detail. Also so-called "full-colours future LCDs are possible. Typically, the colour filters are provided on the front substrate.

Because of simplicity, in this figure, lighting (both external and auxiliary) will only be schematically illustrated, since it operates in a conventional way, i. e. in a transflective mode, when light from the outside passes through the conductive layer 9, the polarizer 8, and the substrate 7 as incident light to the liquid crystal layer 6. Typically, the light is made incident to the rear substrate 5 and the second polarizer 4, and reaches a transflective reflector (not shown) whereby it is partly reflected and goes out to an observer as reflected light. Light coming from the auxiliary light source 2 positioned below the transflective reflector becomes a transmission light which passes through the transflective reflector and the liquid crystal layer 6.

Pixel addressing schemes could be of any suitable conventional type, such as row or column addressing schemes, and will therefore not be further described in more detail.

All driving circuits, typically comprising timing and control subunits, column drivers and row drivers in order to drive an LCD could be designed according to known principles.

Typically, the display unit 1 comprises an essentially translucent conventional liquid crystal (LC) layer 6 of a liquid crystal display (LCD). Of course also other types of semi-conducting layers 6 that can be employed for presenting information could be used without departing from the invention, provided they have low resistance and typically also low power consumption during operation. Since the operation of an LCD is well known from prior art, the operating principle thereof will not be explained in detail, but only the parts relevant for understanding the invention will be described in more detail.

Typically, the conductive layer 9 has a transparency more than 90 %.

Preferably, the conductive layer 9 is made of indium tin oxide (ITO). Of course, also other suitable conductive materials can be employed such as polymeric materials, provided they are transparent enough.

The display including liquid crystal (LC) layer and lighting system (not shown) is then assembled in a portable electronic device 20 such as a mobile phone, which is illustrated in Fig. 3. It is not necessary that the electronic device 20 is able to communicate in the same way as a mobile phone, but any portable electronic device where there is a need for a better display could benefit from the invention.

Fig. 3 shows a portable electronic device 20, herein in the form of a cellular phone having an antenna 10, and display 1.

The invention could be implemented in both passive (STNC) and active (TFT) devices (technology), in any type of portable electronic device such as clamshell or stick mobile phone, but also in the automotive industry, or any other communication device that has to be shielded to prevent RF loss or EMC interaction.

## Claims

1. Display unit for a portable electronic device, comprising:
- a rear substrate (5), a front substrate (7), and sandwiched there-between
- an essentially translucent display layer (6), which is semi-conducting,
- wherein said front substrate (7) comprises an essentially transparent conductive layer (9) adapted to prevent electromagnetic absorption or interaction, such that the display unit (1) is shielded.

2. Display unit according to claim 1, wherein the conductive layer (9) has a transparency more than 90 %.

3. Display unit according to claim 1 or 2, wherein the conductive layer (9) is made of indium tin oxide (ITO).

4. Display unit according to claim 1 or 2, wherein the conductive layer (9) is made of a polymeric material.

5. Display unit according to claim 1-4, wherein the conductive layer (9) is connected to ground on the PCB.

6. Display unit according to claim 5, wherein the conductive layer (9) is arranged in a metal frame connected to ground on the PCB.

7. Display unit according to claim 6, wherein the conductive layer is arranged to the frame by putting the layer on the top of the display after assembling of the display unit.

8. Display unit according to any one of the claims 1-7, wherein the conductive film (9) is provided on a front polarizer of the front substrate (7).

9. Portable electronic device comprising:
- a rear substrate (5), a front substrate (7), and sandwiched there-between
- an essentially translucent display layer (6), which is semi-conducting,
- wherein said front substrate (7) comprises an essentially transparent conductive layer (9) adapted to prevent electromagnetic absorption or interaction, such that the display unit (1) is shielded.
